# EUROPEAN PATENT APPLICATION

(11) **EP 1 002 922 A2**
(43) Date of publication of application: **24.05.2000**
(21) Application number: 99122619.2
(22) Date of filing: 13.11.1999
(51) Int. Cl.: E05F 15/00, B60J 1/17, G01S 15/00

(54) **Device to protect against jamming limbs in power windows in motor vehicles**

(30) Priority: 18.11.1998 DE 19853155; 04.02.1999 DE 19904455
(71) Applicant: Delphi Technologies, Inc., Troy, MI 48007 (US)
(72) Inventor: Giesen, Marko, 51588 Nümbrecht (DE); Suck, Jochen, 51674 Wielh (DE)
(74) Representative: Cohausz & Florack

(57) **Abstract**

Described is a device to protect against jamming limbs in power windows of motor vehicles, comprising an ultrasound generator (7), an ultrasound sensor (8), evaluation electronics (13) and a memory (14). To realise such a device to protect against jamming in a particularly reliable and at the same time cost-effective way, it is proposed that the ultrasound generator (7) and the ultrasound sensor (8) be attached to a window pane (1), spaced apart, such that the glass of the window (1) serves as a transmission medium; with a reference amplitude frequency response being able to be stored in the memory (14), said reference amplitude frequency response being compared by the evaluation electronics (13) with the actual amplitude frequency response recorded by the ultrasound sensor (8); with the evaluation electronics (13) issuing a control signal if a specified limiting value or specified limiting values has/have been exceeded; said control signal causing stopping or reversal of the closing process of the window pane (1).

## Description

The invention relates to a device to protect against jamming limbs in power windows of motor vehicles, comprising an ultrasound generator, an ultrasound sensor, evaluation electronics and a memory.

Such a device to protect against jamming limbs is known from DE 40 30 607 A1. This protection device is based on the radar principle, with an echo profile received under normal conditions being stored as a reference profile in a digital memory, and with the currently received echo profile being compared each time with the stored reference profile. In this, during the closing process of a power window, ultrasound impulses are conducted past the window gap, and if circumstances arise which correspond to an object or a limb being jammed in the gap, a signal is triggered which stops the automatic closing process. The ultrasound generator and the ultrasound sensor are attached on the inside of the vehicle roof, above the gap to be monitored, spaced apart from each other. This monitoring system has the disadvantage in that with a relatively long gap to be monitored, several ultrasound receivers are required to ensure that adequate safety to protect against jamming is provided by the device. However, installation of several ultrasound receivers increases the costs of such a system.

It is the object of the present invention to provide a device to protect against jamming, of the type mentioned in the introduction, which is particularly safe and economical to realise.

In the device to protect against jamming limbs, of the type mentioned in the introduction, this object is met in that the ultrasound generator and the ultrasound sensor are arranged on a window pane, spaced apart, such that the glass of the window pane serves as a transmission medium, with a reference amplitude frequency response being storable in the memory, with said amplitude frequency response being compared by the evaluation electronics with the actual amplitude frequency response recorded by the ultrasound sensor. When a specified limiting value or specified limiting values is/are exceeded, the evaluation electronics issue a control signal which causes the closing process of the window to be stopped or reversed.

The system according to the invention makes it possible, with only one ultrasound sensor and one ultrasound actuator (ultrasound generator), to realise an absolutely safe device to protect against jamming, even in the case of a relatively long window gap to be monitored. In the system according to the invention, the ultrasound generator and the ultrasound sensor can be arranged in the window area located in the body of the door, where they are protected. In contrast to the previously mentioned known device to protect against jamming limbs, with the device according to the invention neither the ultrasound generator nor the ultrasound sensor can be covered up or shielded by objects carried in the motor vehicle, which objects may impair the function of the protective device.

A preferred embodiment of the invention provides for the evaluation electronics to periodically record and process the amplitude frequency response of a transmission distance defined by the ultrasound generator and the ultrasound receiver.

Another advantageous embodiment of the invention provides for the evaluation electronics to update the stored reference amplitude frequency response in that said reference amplitude frequency response is updated with respect to the actual amplitude frequency response recorded by the ultrasound sensor.

The use of the monitoring system according to the invention is not confined to application as a device to protect against jamming. In addition, the system can also be used to advantage for glass breakage detection or monitoring of the interior space. Accordingly, the control signal issued by the evaluation electronics can also be used to activate a visual and or acoustic alarm device.

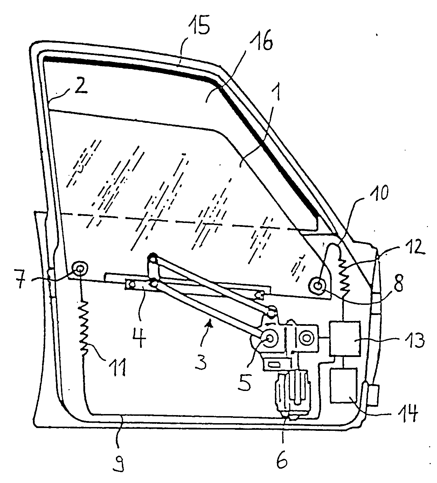

Below, the invention is illustrated in more detail in a drawing showing one embodiment. The sole figure of the drawing diagrammatically shows a motor vehicle door with drop-down window 1.

The window 1 which is guided in a lateral window guide 2 of the vehicle door, can be automatically lowered into, or raised from, the body of the vehicle door by means of a window lifting mechanism 3. The window lifting mechanism 3 comprises a window carrier 4 which is attached to the lower edge of the window pane and connected to a reduction gear 5 via a lifting mechanism. The reduction mechanism 5 is coupled with a window lifting motor 6 which can be activated via a control device (not shown).

The lower section of the window pane 1, located in the body of the door, accommodates an ultrasound generator 7 and an ultrasound sensor 8. The ultrasound generator 7 and the ultrasound sensor 8 are arranged in such a way, spaced apart, that the sound waves emitted by the ultrasound generator 7 (structure-borne sound waves) take a predefined transmission path through the window pane 1, with the glass being used as the transmission medium. By way of electrical cables 9, 10 comprising flexible sections 11, 12, the ultrasound generator 7 and the ultrasound sensor 8 are connected to evaluation electronics 13 which comprise an associated memory 14. Stored in the memory 14 is a reference amplitude frequency response which is compared to the actual amplitude frequency response recorded by the ultrasound sensor 8, by the evaluation electronics 13. The amplitude frequency response of the transmission distance is periodically recorded and processed. The recording periods can be selected to be sufficiently short to practically ensure continuous monitoring of the window pane.

If the window pane 1 is subjected to mechanical loads, for example by a sudden jamming force between the window pane 1 and the door frame 15, then the amplitude frequency response is characteristically influenced. Comparison with the previously determined amplitude frequency response makes it possible to recognise circumstances which correspond to the jamming of an object or a limb in the window gap 16. If a comparison between the stored reference amplitude frequency response and the actually recorded amplitude frequency response shows that system-specific, defined limiting values have been exceeded, then the evaluation electronics 13 issue a control signal to the window lifting motor 6, which control signal causes stopping or reversal of the closing process of the window pane 1.

A preferred embodiment of the device according to the invention, to protect against jamming, provides for a reference amplitude frequency response to be recorded in the memory 14 at the start of the closing process, with said reference amplitude frequency response being permanently updated as a consequence of the closing movement. In this context, updating means that the reference amplitude frequency response is made to intelligently track the actual amplitude frequency response.

Due to recording and processing of the amplitude frequency response of the transmission distance constituted by the window pane 1, the device according to the invention to protect against jamming, can additionally be used for glass breakage detection or monitoring of the interior space.

## Claims

1. A device to protect against jamming limbs in power windows (1) of motor vehicles, comprising an ultrasound generator (7), an ultrasound sensor (8), evaluation electronics (13) and a memory (14), characterised in that the ultrasound generator (7) and the ultrasound sensor (8) are attached to a window pane (1), spaced apart, such that the glass of the window (1) serves as a transmission medium; with a reference amplitude frequency response being able to be stored in the memory (14), said reference amplitude frequency response being compared by the evaluation electronics (13) with the actual amplitude frequency response recorded by the ultrasound sensor (8); with the evaluation electronics (13) issuing a control signal if a specified limiting value or specified limiting values has/have been exceeded; said control signal causing stopping or reversal of the closing process of the window pane (1).

2. A device to protect against jamming, according to claim 1, characterised in that the evaluation electronics (13) periodically record and process the amplitude frequency response of a transmission distance defined by the ultrasound generator (7) and the ultrasound receiver (8).

3. A device to protect against jamming, according to claim 1 or 2, characterised in that the evaluation electronics (13) updates the stored reference amplitude frequency response by said reference amplitude frequency response being updated with respect to the actual amplitude frequency response recorded by the ultrasound sensor (8).

4. A device to protect against jamming according to one of the preceding claims, characterised in that the control signal activates a visual and/or acoustic alarm device.
